Europäisches Patentamt

(19) European Patent Office

Office européen des brevets

(11) Publication number: **0 016 602**
A1

## (12) EUROPEAN PATENT APPLICATION

(21) Application number: 80300749.1

(22) Date of filing: 11.03.80

(51) Int. Cl.³: **F 03 D 1/06**
**F 03 D 7/04**

(30) Priority: 12.03.79 IE 335/79

(43) Date of publication of application:
01.10.80 Bulletin 80/20

(84) Designated Contracting States:
BE DE FR GB NL SE

(71) Applicant: Gilchrist, Timothy Michael
Mavis Bank
Newrath Waterford(IE)

(72) Inventor: Gilchrist, Timothy Michael
Mavis Bank
Newrath Waterford(IE)

(74) Representative: Ritter, Stephen David
Mathys & Squire 10 Fleet Street
London EC4Y 1AY(GB)

(54) Improvements in rotors for wind powered electric generators.

(57) The rotor comprises an outer annular augmenter (1) of aerofoil cross-section connected to a central hub (2) by a plurality of radial cables (3, 6) of high tensile strength, which also support a plurality of radially disposed rotor blades (5). In a preferred embodiment the rotor blades (5) are adjustable in length in a radial direction so that the surface area presented by the blades (5) may be reduced. Each blade (5) may comprise a plurality of templates (14) spaced radially along the support cables (6) and covered by a flexible membrane (16), and means are provided for sliding the templates (14) along the support cables when it is desired to adjust the length of the blades. A second annular augmenter (4) or shroud may be positioned intermediate the outer augmenter (1) and hub (2) and concentric therewith in which case a first set of radial rotor blades (5) is positioned between the outer and intermediate augmenters, and a second set positioned between the intermediate augmenter and the hub (2).

Fig. 16.

EP 0 016 602 A1

- 1 -

## Improvements in rotors for wind-powered electric generators

The invention relates to improvements in rotors for wind-powered electric generators and the like.

In recent years the general tendency has been to use a two-bladed rotor with wind-powered electric generators. Theoretically, a mathematical computer-designed two-bladed high speed wind rotor is the most efficient type but this has not always proved to be the case in practice. All two-bladed rotors, of their nature, are two-dimensional structural systems only (i.e. single counterbalanced beams rotating around a fixed centre point), and are of very limited structural integrity. Such natural hazards as ice, snow, wind blown sand, high wind gusts and wind shadow vibration from the rotor supporting tower, added to the rotor's own centrifugal stresses and strains invariably result in extremely dangerous control problems and ultimately complete collapse of the rotor. Such high speed operational breakages of heavy two-dimensional rotor blades are extremely hazardous to life and property within a large area radius of the wind-powered generator. The use of single-bladed wind turbines has been experimented with but these are also subjected to the above problems, and may also experience excessive vibration levels and high noise output because of high tip-speed ratios.

It is an object of the invention to overcome the problems associated with one- and two-bladed rotors and to provide a multi-blade wind turbine rotor having a three-dimensional tensile structural system. It is also an object of the invention to provide a rotor in which the surface area of the blades may be reduced without altering the pitch of the blades.

According to the invention a wind turbine rotor comprises an outer annular peripheral member of aerofoil section connected to an annular hub member by means of a plurality of radial cables of high tensile strength to provide a rigid wheel structure, and a plurality of rotor blades of aerofoil section disposed radially between the outer peripheral member and the hub member. Preferably, a second annular aerofoil member is disposed concentrically with said outer peripheral member and is positioned between said outer peripheral member and the hub member.

The aerofoil rotor blades are preferably supported on a plurality of radial cables of high tensile strength connecting the outer peripheral member with the hub member. Where a second annular aerofoil member is provided one set of aerofoil rotor blades may be disposed radially outwardly of the second annular aerofoil member, while a second set of aerofoil rotor blades is disposed radially inwardly of the second annular member. In one embodiment the number of radial aerofoil rotor blades disposed between the second annular aerofoil member and the outer annular peripheral member is greater than the number of rotor blades between said second annular aerofoil member and the hub member.

According to a second aspect of the invention a wind turbine rotor comprises an outer annular peripheral member connected to an annular hub member by means of a plurality of radial cables of high tensile strength to provide a rigid wheel structure, a plurality of rotor blades of aerofoil section disposed radially between the outer peripheral member and the hub and supported by said radial cables, wherein means are provided for adjusting the radial length of the rotor blades whereby the surface area of the rotor blades may be reduced. In accordance with one embodiment of the invention each radial rotor blade comprises a plurality of templates of aerofoil shape disposed in spaced apart parallel relation along said radial cables, and a flexible membrane connected to the outer edges of the templates to form the outer surface of the rotor blade, and wherein means are provided for moving said templates radially towards or away from the hub member whereby the radial length of the rotor blade is adjusted. Preferably, the means for moving the templates comprises at least one cable movable in a radial direction between the hub member and the outer, annular peripheral member.

Some embodiments of the invention are hereinafter described with reference to the accompanying drawings wherein:

Figure 1 is a front elevation of one embodiment of a rotor according to the invention;
Figure 2 is a sectional side elevation on the line II-II of Figure 1;
Figure 3 is a side elevation of an alternative form of rotor construction according to the invention;
Figure 4 is a side elevation of a detail of the assembly of Figure 1;
Figure 5 is a front elevation of the detail shown in Figure 4;

Figure 6 is a front elevation of a second embodiment of a rotor according
to the invention;

Figure 7 shows a detail of the aerofoil blade unit and radial tensile ribs;

Figure 8 shows a cross-section through an outer annular peripheral member of
the rotor of Figures 1 and 6;

Figure 9 is a sectional view of an aerofoil blade;

Figure 10 is a sectional view of a rotor blade;

Figure 11 is a front elevation of the support structure for an adjustable
length rotor blade in accordance with another embodiment of the invention, showing the rotor blade in the fully extended position;

Figure 12 is a view similar to that of Figure 11 but showing the rotor blade
in a fully retracted position;

Figures 13 and 14 are side elevations of a detail of the arrangements shown in

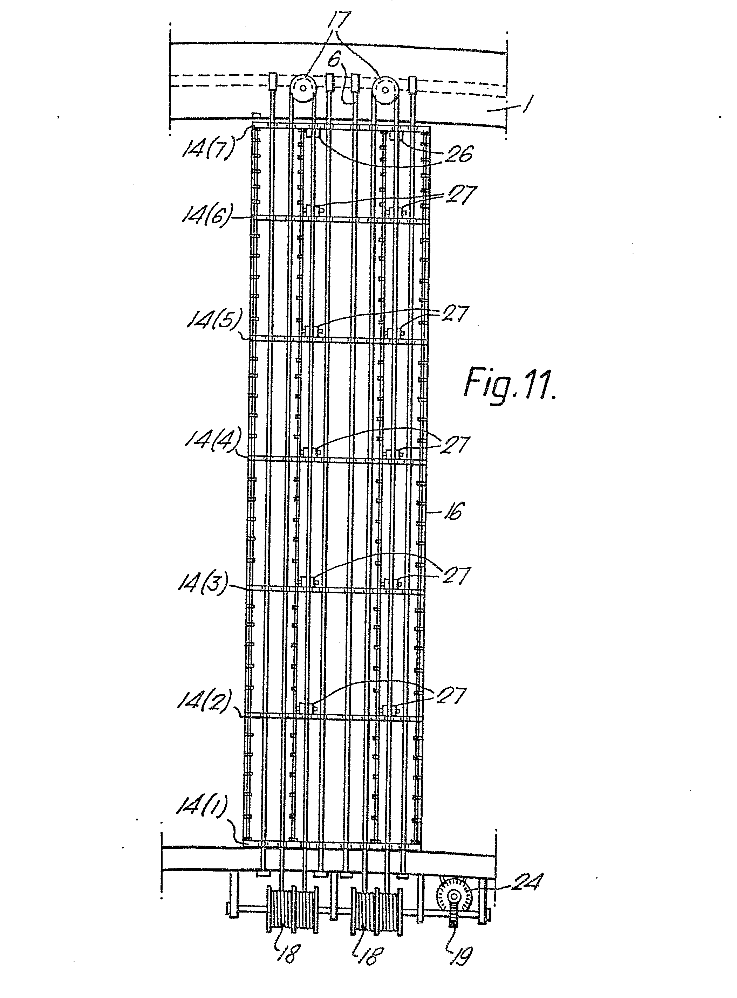

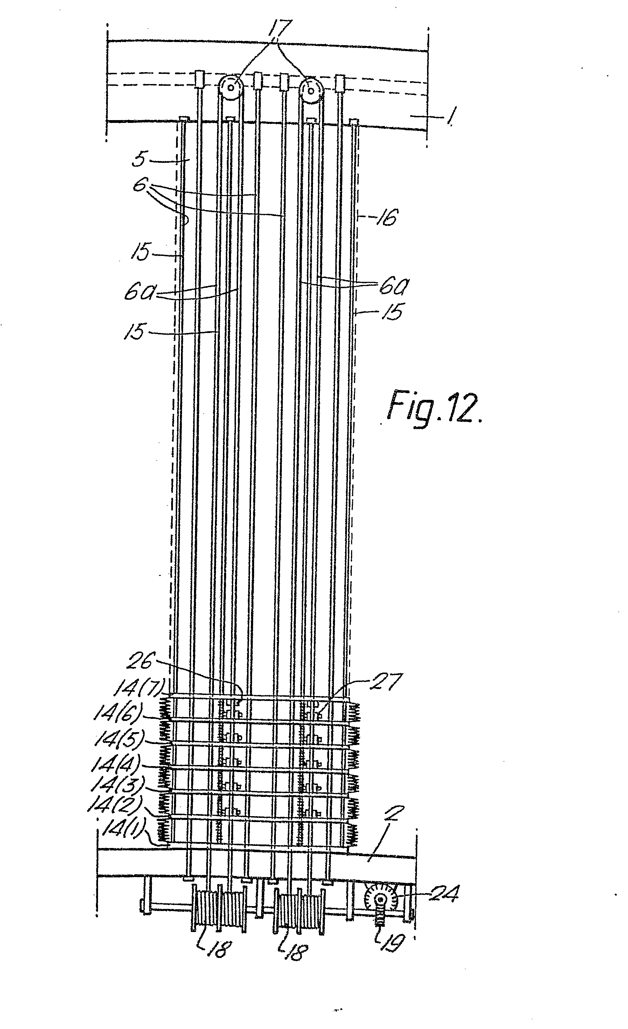

Figures 11 and 12 respectively;

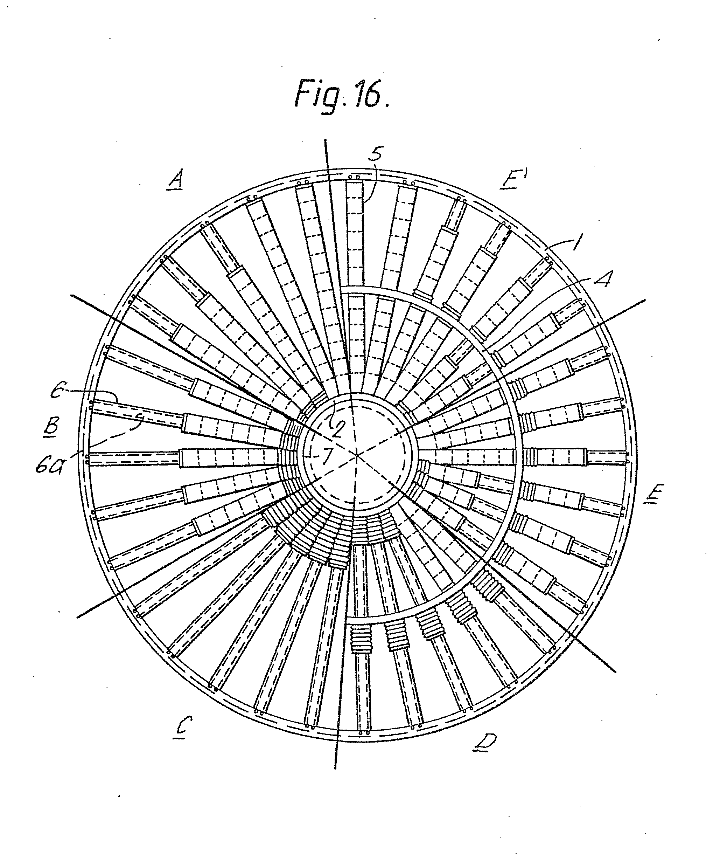

Figure 15 is a cross-sectional view of a rotor blade; and

Figure 16 is a diagrammatic front elevation illustrating various modifications
of the rotor blade arrangement.


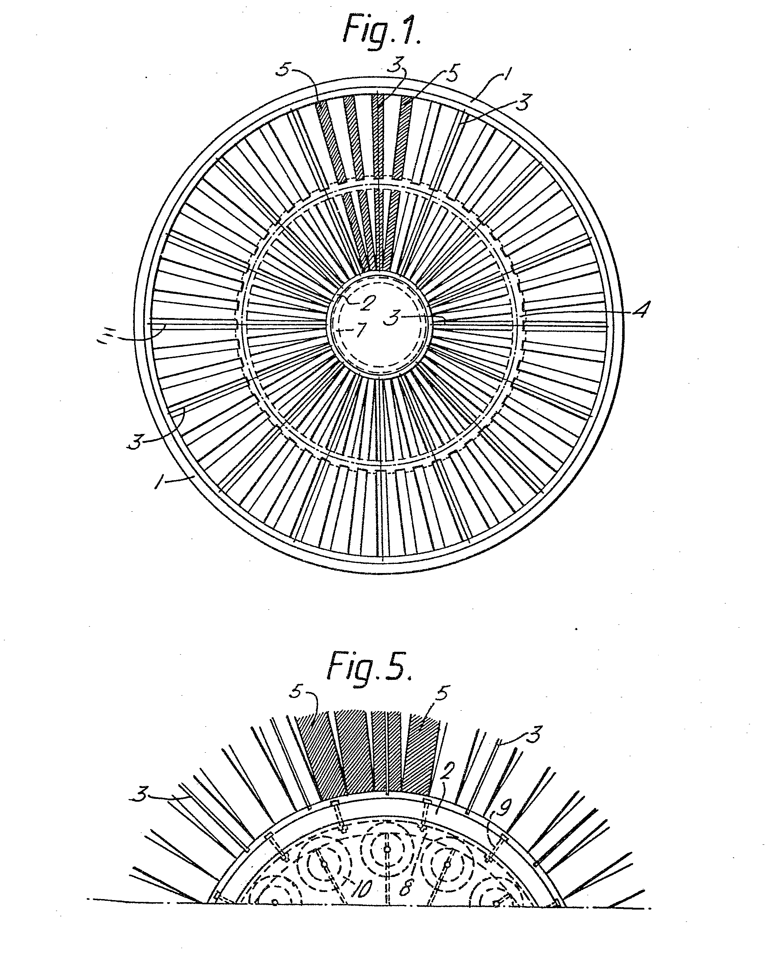

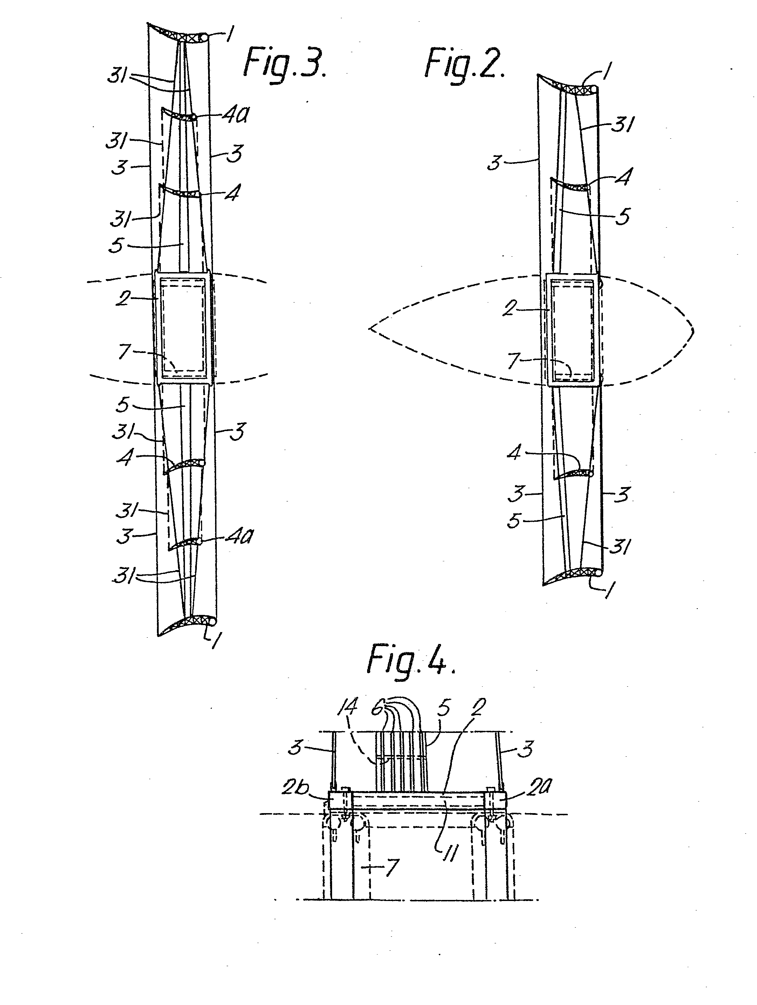

Referring to Figures 1 and 2 of the drawings, a wind turbine rotor comprises an
outer annular peripheral member 1 of aerofoil section and an internal structural
support ring unit or hub 2. The outer annular peripheral member 1 is connected
to the hub member 2 by means of a plurality of radial cables 3 of high tensile
strength which can be manufactured, for example, from high tensile steel wire
but preferably are of sheathed polyamide filaments (for example of the kind sold
under the trade names "PARAFIL" or "KEVLAR"). Preferably, a second annular aerofoil member 4, disposed concentrically to the outer peripheral member 1, is positioned midway between member 1 and hub 2. A plurality of rotor blades 5 of aerofoil section extend radially between the hub 2 and the outer peripheral member 1.
The rotor blades 5 are supported by groups of high tensile strength cables 6 which
extend radially and which also connect the outer peripheral member 1 with the hub
member 2.


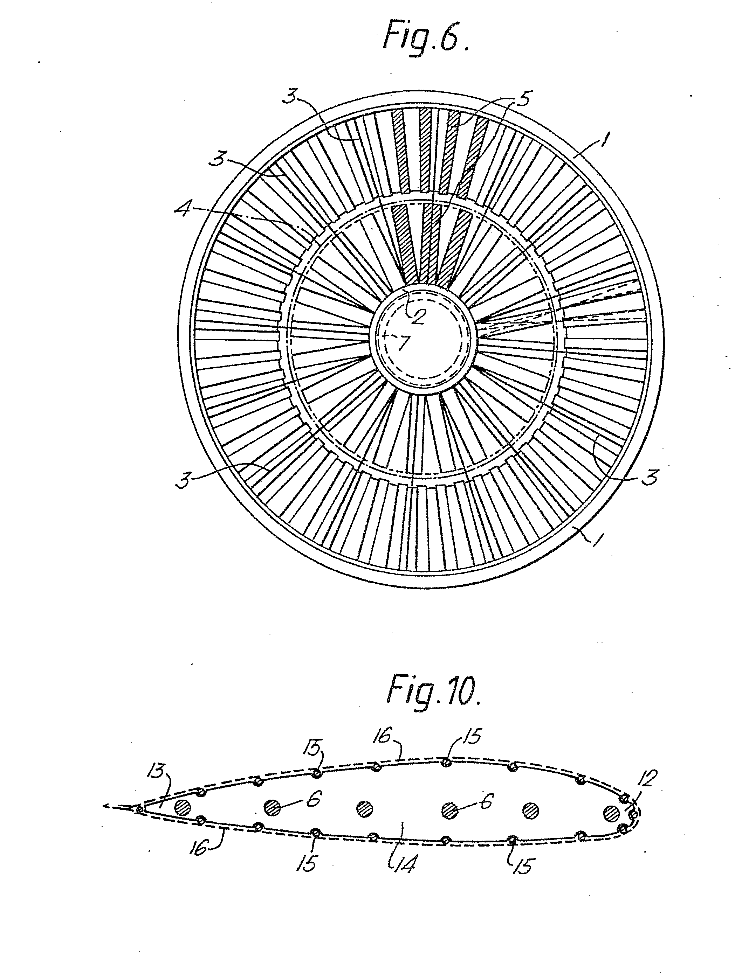

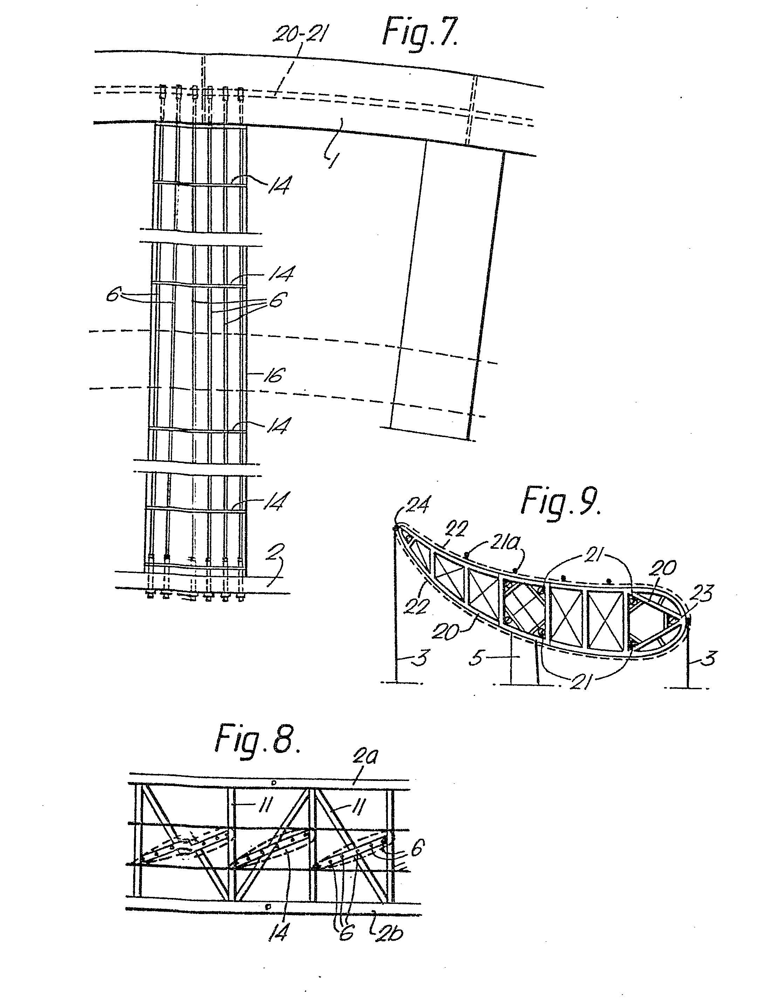

The hub 2 can be of any desired circumference and can be of indefinite axial
length. The hub 2 is supported by a suitable rotating support system 7 which
is shown in more detail in Figures 4 and 5. The support system 7 preferably
comprises an internal rotating ring 8 to which the hub 2 is connected by means
of bolts 9 or the like. The inner ring 8 is in turn supported by a plurality of revolving wheels 10. As shown more clearly in Figure 8 the hub 2 is comprised of a radially front ring 2a connected to a radially rear ring 2b by means of rigid diagonal bracing or lattice work 11 to form an extremely rigid three-dimensional unit.

The method of supporting the aerofoil blades 5 is illustratrated for example in Figures 7 and 8. As explained previously groups of high tensile strength cable 6 are connected between the hub member 2 and the outer peripheral member 1. These cables are connected to members 1 and 2 by bolts or other suitable means and are positioned on the hub member 2 in the most efficient aerodynamic position. The cables 6 are disposed diagonally across the hub member 2 as shown in Figure 8, that is at an angle to the rotational axis, so that the rotor blades 5 are also disposed at an angle to the rotational axis. The rotor blades 5 have the general cross-sectional shape shown in Figure 10 and have a leading edge 12 and a trailing edge 13. It will be appreciated that both the leading edge and trailing edge extend radially of the rotor.

As shown more clearly in Figures 7 and 10, the cables 6 support aerofoil shaped templates 14 which in turn impart an aerofoil shape to the secondary tensile support cables 15. The aerofoil blade is completely enclosed in an outer covering 16 comprised of a weatherproof plastics membrane or the like.

The general cross-sectional shape of the outer annular peripheral member 1 is shown for example in Figure 9. The member 1 is comprised of a suitably shaped lattice beam three dimensional framework 20 which is curved to form a rigid circular unit of aerofoil shape and cross-section. The rigidity of construction is aided by means of continuous circular stress cables 21 which are threaded peripherally through the lattice structure by way of post tensioning the structural assembly against excessive centrifugal forces. The outer surface of the outer annular peripheral member 1 is provided with an outer covering of a plastics or like membrane 22 similar to the cover 16 of the aerofoil blades. Tensioned peripheral cables 21a maintain plastics membrane 22 in aerofoil form and tension same against the structural framework 20. The outer peripheral member 1 has a leading edge 23 and a trailing edge 24 and these edges are connected by means of cables 3, to the hub member 2. As shown in Figure 2, additional radial bracing cables 31 may also be provided to impart additional rigidity to the structure. In the embodiment shown in Figure 2, a single intermediate annular aerofoil member 4 is disposed midway between the annular member 1 and the hub 2. The annular member 4 is constructed in substantially the same manner as the annular member 1. In the embodiment shown in Figure 3 two intermediate annular members 4 and 4a are shown. In this embodiment extra bracing by means of additional cables 3 and 31 is provided.

In the embodiment shown in Figure 1 the aerofoil rotor blades 5 are disposed radially to each side of the intermediate annular aerofoil member 4 and the rotor blades to each side of the member 4 are in radial alignment with each other. However, in the embodiment shown in Figure 6 the rotor blades disposed circumferentially outwardly of the intermediate annular member 4 are greater in number than those disposed between the member 4 and the hub 2.

It will be appreciated that by using high tensile strength radial cables an extremely rigid circular wheel construction of any axial length may be obtained. Any number of the non-structural aerofoil-shaped blades can be carried by the cables so as to achieve maximum aerodynamic rotational power efficiency at all wind speeds. The wind turbine rotor as constructed in accordance with the invention is designed to withstand all wind forces in a manner similar to any well-designed high building, without any reference to the rotor unit's rotational factor. There is no need for the rotor of the invention to make any concession to wind forces, for example by yawing, feathering, furling or tethering. The wind turbine rotor according to the invention is designed to extract maximum power from the wind regardless of wind speed, gust effects. and the worst possible weather conditions.

Without prejudice to the foregoing it may be desirable in certain circumstances to reduce the surface area of the rotor blades, for example when erecting the rotor, servicing or re-cladding the rotor, or if it is desired to reduce the speed of the rotor in very high winds. This may be achieved by means of the embodiment of the invention shown in Figures 11 to 16.

In this embodiment the overall construction of the rotor is similar to that described in relation to Figures 1 to 8 and like reference numerals denote like parts. As in the previous embodiments the outer annular peripheral member 1 is preferably of aerofoil section, that is it may act as an augmenter. Alternatively, however, the outer annular peripheral member 1 of this embodiment may be in the form of a shroud, that is not of aerofoil cross-section. The main difference between this embodiment and the embodiments previously described is that means are provided for adjusting the radial length of the rotor blades.

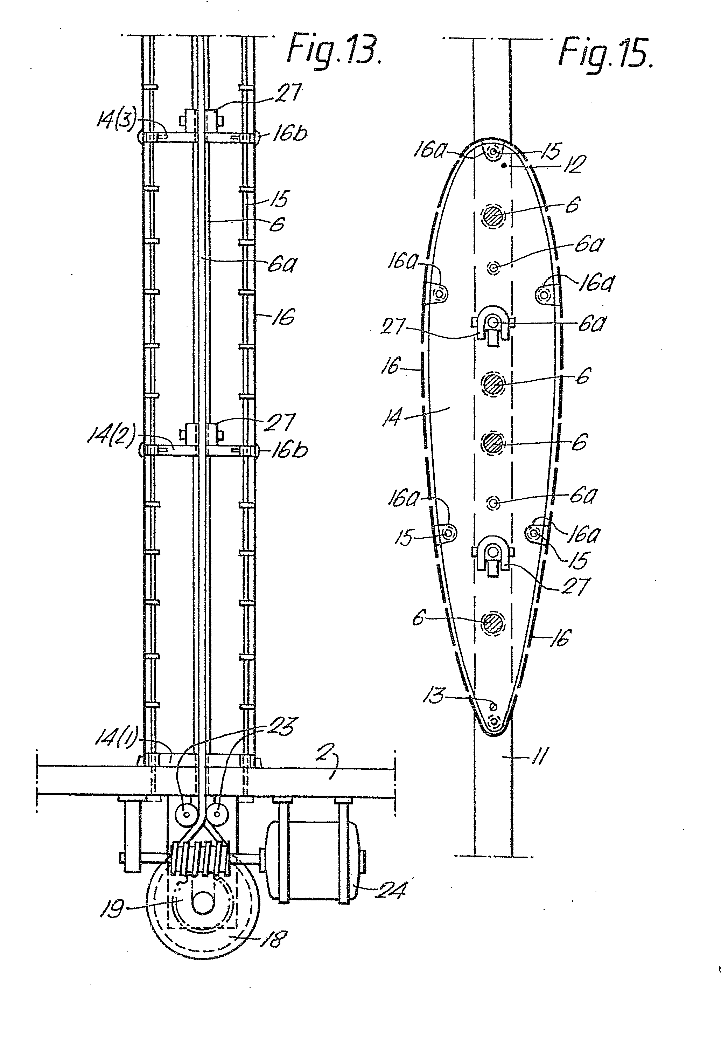

The arrangement for adjusting the radial length of the rotor blades 5 is shown in Figures 11 to 15. In this arrangement the aerofoil-shaped templates 14 are disposed in spaced apart relation along the radial support cables 6. The templates 14 are disposed parallel to each other and lie in planes which are disposed along chords of the circle defined by the outer annular peripheral member 1. In the embodiment shown in Figures 11 and 12 there are seven templates 14, which are numbered 14(1) to 14(7). The radially innermost template 14(1) is fixed to the hub 2 by bolts or the like (not shown). The support cables 6 extend through apertures in the templates such that the templates 14(2) to 14(7) can slide radially along the cables 6. Movement of the templates 14(2) to 14(7) along the support cables 6 is achieved by means of a pair of control cables 6a. Each control cable 6a is wound on a winding drum 18 located within the hub 2 and the cable 6a passes from a first portion of the winding drum down radially through apertures in each of the templates 14, around a pulley 17 on to the peripheral member 1, back through a second set of apertures in the templates 14, to where it is wound in the opposite direction around a second part of the winding drum 18. The cable 6a is guided on to the respective parts of the winding drum 18 by means of guide pulleys 23 (see Figure 13). The winding drums 18 are operated by means of a reversible electric motor 24, from which drive is transmitted by means of a pinion 25 coupled to the motor 24 which meshes with a crown wheel 19 coupled to a shaft driving the winding drums 18. By means of this arrangement each control cable 6a can move continuously in one direction around the pulleys 17, or by reversing the motor 24 can move continuously in the opposite direction.

The radially outermost template 14(7) is permanently clamped to each control cable 6a by means of a clamp 26. Each of the templates 14(2) to 14(6) is provided with a pair of clamps 27 fixed to the surface of the template and through which the cables 6a pass. The clamps 27 may be operated by electric solenoids or by an electro-hydraulic or like system. When activated each clamp 27 grips the cable 6a so as to hold the templates 14 in fixed spaced relation to each other.

The rotor blade is shown in its fully retracted position in Figure 11 in which the templates are equally spaced along the support cable 6, and the clamps 27 are activated to grip the cable 6a which is motionless. In order to retract the rotor blade the clamps 27 of each template 14(2) to 14(6) are deactivated and released from the cable so that the cable 6a can pass freely through each of the clamps. The motor 24 is then activated to operate the pulleys 18 such that the control cables 6a will move in a clockwise direction as viewed in Figures 11 and 12. Because the radially outermost template 14(7) is permanently clamped to the control cables 6a which template will be caused to slide along the support cables 6 in a radially inwards direction and will in turn push the templates 14(6) to 14(2) radially inwards towards the hub 2. The templates 14 are shown in a fully retracted position in Figure 12 but it will be appreciated that by stopping the motor when template 14(7) is at a desired radial position on the cables 6 and then applying the clamps a partial retraction of the rotor blades 6 may be obtained.

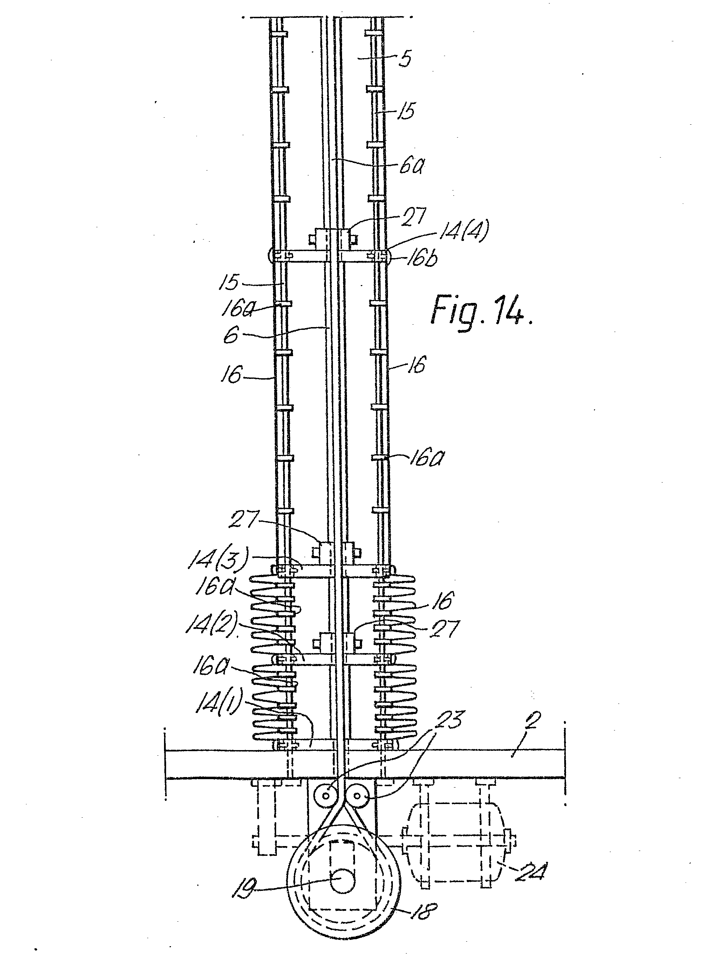

As shown more clearly in Figures 13 and 14 the flexible membrane 16 is supported on secondary fixed cables 15 by means of sliding rings 16a so that the membrane can flex relative to the cables 15. At spaced radial intervals corresponding to the space between the templates when the rotor blade 6 is fully extended, the membrane is fixed to the peripheral edges of the templates by means of pins or screws 16b.

In order to extend the rotor blades 6 from the position shown in Figure 12 to the position shown in Figure 11, the motor 24 is activated in a reverse direction to that used to retract the blade. This causes the control cable 6a to move in an anticlockwise direction to pull the template 14(7) radially outwardly. As the template 14(7) moves radially outwardly the membrane 16 between template 14(7) and template 14(6) becomes taut and so pulls template 14(6) radially outwardly. In the same manner each of the templates is pulled radially outwardly (see Figure 14) until the blade is fully extended. The motor is then stopped and clamps 27 are applied to hold the templates in spaced relation to each other. It will be appreciated that while in the embodiment shown the clamps 27 act on the control cables 6a they could alternatively be arranged to act on the support cables 6.

- 8 -

Figure 16 shows in diagrammatic fashion two separate embodiments using the adjustable rotor blade of the invention. In segments A to C of Figure 16 the rotor construction has a hub 2 and a single outer annular member 1, whereas in the embodiment illustrated in segments D to F a second annular aerofoil member 4 is disposed between the outer peripheral member and the hub member. Turning now to segment A this shows two blades fully extended and three blades which have been retracted by about 25% of their length. Segment B shows all five blades retracted to about 50% of their length, while segment C shows all five blades fully retracted. Segments D to F show examples of various combinations which may be obtained in the case where an intermediate annular aerofoil member 4 is utilised. In this embodiment the blades between the hub 2 and member 4 can be adjusted in length independently of the blades positioned between member 4 and the outer peripheral member 1.

CLAIMS

1.   A wind turbine rotor comprising an outer annular peripheral member (1) of aerofoil section connected to an annular hub member (2) by means of a plurality of radial cables (3, 6) of high tensile strength to provide a rigid wheel structure, and a plurality of rotor blades (5) of aerofoil section disposed radially between the outer peripheral member (1) and the hub member (2).

2.   A rotor according to claim 1, wherein a second annular aerofoil member (4) is disposed concentrically with said outer peripheral member (1) and is positioned between said outer peripheral member (1) and the hub member (2).

3.   A rotor according to claim 1 or claim 2, wherein the aerofoil rotor blades (5) are supported by radial cables (6) of high tensile strength connected between said outer annular peripheral member and said hub member.

4.   A rotor according to claim 2, wherein a first set of aerofoil rotor blades (5) is disposed radially outwardly of the second annular aerofoil member, while a second set of aerofoil rotor blades (5) is disposed radially inwardly of the second annular member (4).

5.   A rotor according to claim 4, wherein the number of radial aerofoil blades (5) disposed between the second annular aerofoil member (4) and the outer annular peripheral member (1) is greater than the number of rotor blades (5) between said second annular aerofoil member (4) and the hub member (2).

6.   A wind turbine rotor comprising an outer annular peripheral member (1) connected to an annular hub member (2) by means of a plurality of radial cables (3, 6) of high tensile strength to provide a rigid wheel structure, a plurality of rotor blades (5) of aerofoil section disposed radially between the outer peripheral member (1) and the hub (2) and supported by said radial cables (6), wherein means are provided for adjusting the radial length of the rotor blades (5) whereby the surface area of the rotor blades (5) may be reduced.

7.   A rotor according to claim 6, wherein each radial rotor blade (5) comprises a plurality of templates (14) of aerofoil shape disposed in spaced apart parallel relation along said radial cables (6), and a flexible membrane (16) connected to the outer edges of the templates (14) to form the outer surface of the rotor blade, and wherein means are provided for moving said templates (14) radially towards or away from the hub member (2) whereby the radial length of the rotor blade (5) is adjusted.

8. A rotor according to claim 7, wherein the means for moving the templates (14) comprises at least one cable (6a) movable in a radial direction between the hub member (2) and the outer, annular peripheral member (1).

9. A rotor according to claim 8, wherein the radial support cables (6) of high tensile strength pass through apertures in the surface of each template (14) such that the templates (14) may slide radially along the cables, and wherein there is a pair of movable control cables (6a) passing through apertures in the surface of each template (14), and wherein the radially outermost template (14(7)) is permanently connected to said control cables (6a), and means are provided for moving said control cables (6a) radially in opposite directions to cause said radially outermost template (14(7)) to slide radially along the support cables (6) which in turn causes the other templates (14(2) to 14(6)) to slide along the support cables (6).

10. A rotor according to claim 9, wherein the means for moving the control cables comprises a winding drum (18) driven by a reversible electric motor (24), and wherein the templates other than radially innermost (14(1)) and the radially outermost (14(7)) templates are each provided with clamps (27) which are adapted to releasably grip said control cables (6a).

Fig.1.

Fig.5.

0016602

Fig.3.

Fig.2.

Fig.4.

**Fig.6.**

**Fig.10.**

Fig.7.

20-21

14

14

6        6

16

14

14

2

Fig.9.

24   22   21a     21      20

22

22        20        21     23

3        5        3

Fig.8.

2a

11        11

6

14   6  2b

Fig.11.

Fig.12.

7/9

Fig.13.

Fig.15.

Fig.14.

Fig.16.

0016602

European Patent
Office

**EUROPEAN SEARCH REPORT**

Application number

EP 80 30 0749

| Category | Citation of document with indication, where appropriate, of relevant passages | Relevant to claim |
|---|---|---|
| | FR - A - 688 774 (DARCHE)  * Page 1, lines 26-59 * | 1-4 |
| | MACHINE DESIGN, vol. 48, June 1976 pages 26-32 Cleveland T. BLACK: "Advanced turbine designs boost wind-power potential"  * Page 31 * | 1,3 |
| | DE - C - 371 459 (WAGNER)  * Page 2, lines 36-67 * | 1 |
| | FR - E - 34 148 (DARCHE)  * Page 3, line 67 - page 4, line 4 * | 1 |
| | FR - A - 1 290 018 (PEYRIERE)  * Figure 3 * | 5 |
| | GB - A - 16385 A.D. 1910 (IRON-MONGER)  * Page 4, line 29 - page 5, line 30 * | 6-9 |
| | US - A - 4 134 708 (BRAUSER)  * Column 24, lines 24-68; figure 9 *                            ./. | 7 |

### DOCUMENTS CONSIDERED TO BE RELEVANT

**CLASSIFICATION OF THE APPLICATION (Int. Cl. 3)**

F 03 D 1/06
7/04

**TECHNICAL FIELDS SEARCHED (Int.Cl. 3)**

F 03 D 1/00
7/00
11/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search  The Hague | Date of completion of the search  11-06-1980 | Examiner  DAVID | |

EPO Form 1503.1  06.78

European Patent Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | ELECTRONICS & POWER, vol. 22, August 1976, pages 530-532 Hitchin, Hertfordshire T. MENSFORTH: "Wind-Power Generation on a large scale, a design idea" -- | | |
| A | FR - A - 2 298 707 (THIOLIERE) | | |
| A | DE - C - 56 239 (UTENDORFER) | | |
| A | DE - C - 169 075 (KUBISCH) ---- | | TECHNICAL FIELDS SEARCHED (Int. Cl. 3) |

EPO Form 1503.2  06.78